# EUROPÄISCHE PATENTANMELDUNG

(11) **EP 3 266 634 A1**
(43) Veröffentlichungstag der Anmeldung: **10.01.2018**
(21) Anmeldenummer: 17175561.4
(22) Anmeldetag: 12.06.2017
(51) Int. Cl.: B60J 7/04

(54) **GLASDECKELEINHEIT EINES SCHIEBEDACHSYSTEMS FÜR EIN KRAFTFAHRZEUG UND VERFAHREN ZUR HERSTELLUNG DER GLASDECKELEINHEIT**

(30) Priorität: 07.07.2016 DE 102016212424
(71) Anmelder: BOS GmbH & Co. KG, 73760 Ostfildern (DE)
(72) Erfinder: Bauhammer, Carsten, 91626 Schopfloch (DE)
(74) Vertreter: Patentanwälte Ruff, Wilhelm, Beier, Dauster & Partner mbB

(57) **Zusammenfassung**

Glasdeckeleinheit (1) eines Schiebedachsystems für ein Kraftfahrzeug mit einem Glasdeckel (2) sowie mit einer Metallträgeranordnung (3) und mit einer Kunststoffumschäumung (4), die in einem Randbereich des Glasdeckels (2) vorgesehen ist und die Metallträgeranordnung (3) relativ zu einer Unterseite des Glasdeckels (2) fixiert, wobei zwischen einer Oberseite der Metallträgeranordnung (3) und der Unterseite des Glasdeckels (2) ein Dichtungseinleger vorgesehen ist, der eine Beabstandung der Oberseite der Metallträgeranordnung (3) zu der Unterseite des Glasdeckels (2) sicherstellt,dadurch gekennzeichnet, dassder Dichtungseinleger als Dichtraupe (5) aus einem deformierbaren Material gestaltet ist, die ringförmig auf der Metallträgeranordnung (3) verläuft, die an der Metallträgeranordnung (3) anhaftet, und die auf Stoß fluchtend aneinanderschließende Raupenenden (5a, 5b) aufweist.

## Beschreibung

Die Erfindung betrifft eine Glasdeckeleinheit eines Schiebedachsystems für ein Kraftfahrzeug mit einem Glasdeckel sowie mit einer Metallträgeranordnung und mit einer Kunststoffumschäumung, die in einem Randbereich des Glasdeckels vorgesehen ist und die Metallträgeranordnung relativ zu einer Unterseite des Glasdeckels fixiert, wobei zwischen einer Oberseite der Metallträgeranordnung und der Unterseite des Glasdeckels ein Dichtungseinleger vorgesehen ist, der eine Beabstandung der Oberseite der Metallträgeranordnung zu der Unterseite des Glasdeckels sicherstellt.

Die Erfindung betrifft zudem ein Verfahren zur Herstellung einer solchen Glasdeckeleinheit.

Aus der DE 35 06 009 C2 ist eine solche Glasdeckeleinheit für ein Schiebedachsystem eines Kraftfahrzeugs bekannt. Die Glasdeckeleinheit weist einen Glasdeckel sowie eine Metallträgeranordnung auf, die zur Halterung entsprechender Funktionsteile des Schiebedachsystems dient. Zur Sicherung der Metallträgeranordnung an der Unterseite des Glasdeckels ist eine Kunststoffumschäumung vorgesehen, die nach ihrer Aushärtung einen starren Verbund zwischen der Metallträgeranordnung und dem Glasdeckel bildet. In der Metallträgeranordnung befindet sich eine nutförmige Vertiefung, die umlaufend in der rahmenförmigen Metallträgeranordnung vorgesehen ist. In die Vertiefung ist eine unterbrechungslos umlaufende Dichtschnur eingelegt. Die Dichtschnur wird durch die Kunststoffumschäumung und durch den Glasdeckel deformiert und drückt sich in die nutförmige Vertiefung hinein.

Aufgabe der Erfindung ist es, eine Glasdeckeleinheit und ein Verfahren der eingangs genannten Art zu schaffen, die gegenüber dem Stand der Technik weiter verbessert sind.

Diese Aufgabe wird für die Glasdeckeleinheit dadurch gelöst, dass der Dichtungseinleger als Dichtraupe aus einem deformierbaren Material gestaltet ist, die ringförmig auf der Metallträgeranordnung verläuft, die an der Metallträgeranordnung anhaftet, und die auf Stoß fluchtend aneinanderschließende Raupenenden aufweist. Erfindungsgemäß ist demzufolge ein deformierbarer Materialstrang vorgesehen, der auf der Metallträgeranordnung anhaftet und kontinuierlich umlaufend auf die Metallträgeranordnung aufgebracht wird. Die erfindungsgemäße Lösung eignet sich in besonders vorteilhafter Weise für ein Schiebedachsystem eines Personenkraftwagens. Der Glasdeckel ist vorzugsweise im Bereich seiner Unterseite ergänzend mit einer Splitterschutzfolie versehen, die sich über die gesamte Unterseite des Glasdeckels erstreckt und flächig an der Unterseite des Glasdeckels anhaftet. Als Kunststoffumschäumung ist vorzugsweise eine PU-Umschäumung vorgesehen. Dadurch, dass der Dichtungseinleger als Dichtraupe gestaltet ist, die an der Metallträgeranordnung anhaftet, kann die Dichtraupe auf einer ebenen Oberfläche der Metallträgeranordnung aufgebracht werden. Im Gegensatz zum Stand der Technik, bei der eine nutförmige Vertiefung für die Dichtschnur vorgesehen sein musste, behält die Dichtraupe demzufolge auch auf einer ebenen Oberfläche der Metallträgeranordnung eine gleichbleibende Ausrichtung, ohne dass die Metallträgeranordnung hierauf abgestimmt werden muss. Dadurch ist eine kostengünstige Gestaltung der Metallträgeranordnung erzielbar. Zudem kann die Bauhöhe der Glasdeckeleinheit aus Glasdeckel, Dichtraupe und Metallträgeranordnung reduziert werden. Die auf Stoß fluchtend aneinanderschließenden Raupenenden gewährleisten, dass auch im Bereich der einander zugewandten Raupenenden eine sichere Abdichtung des zwischen der Glasdeckelunterseite und der Oberseite der Metallträgeranordnung verbleibenden Spaltes erzielt wird, so dass gewährleistet ist, dass die Kunststoffumschäumung von außen her lediglich bis zu der Dichtraupe zwischen die Glasdeckelunterseite und die Oberseite der Metallträgeranordnung eindringen kann.

In Ausgestaltung der Erfindung ist die Dichtraupe durch eine flüssig oder fließfähig verarbeitbare Dichtmasse gebildet. Die Dichtmasse wird als entsprechender Strang kontinuierlich auf die Metallträgeranordnung aufgebracht unter Bildung der Dichtraupe. Die Dichtraupe ist gegenüber der Oberseite der Metallträgeranordnung wulstförmig erhöht und wird deformiert, sobald der Glasdeckel aufgelegt wird und die Kunststoffumschäumung angebracht wird.

In weiterer Ausgestaltung der Erfindung ist als Dichtmasse PU-Weich- oder -Hartschaum, ein Klebstoff, Silikon oder ein vergleichbares Material vorgesehen. Diese Ausgestaltung ist besonders vorteilhaft, um den gewünschten Abstand der Metallträgeranordnung zur Unterseite des Glasdeckels in fertiggestelltem Endzustand aufrechtzuerhalten.

In weiterer Ausgestaltung der Erfindung ist als Dichtmasse ein Ein- oder Mehrkomponenten-Kunststoffmaterial vorgesehen. Das Kunststoffmaterial kann als Zwei- oder Dreikomponenten-Material gestaltet sein. Bei einer Zweikomponenten-Version ist vorzugsweise eine Komponente als Härter-Komponente vorgesehen.

In weiterer Ausgestaltung der Erfindung ist die Metallträgeranordnung mit einer Beschichtung, insbesondere durch eine kathodische Tauchlackierung, versehen. Hierdurch wird das Anhaften der Dichtraupe an der Metallträgeranordnung weiter verbessert.

Für das Verfahren wird die der Erfindung zugrunde liegende Aufgabe dadurch gelöst, dass die Dichtraupe ringförmig umlaufend auf die Metallträgeranordnung aufgebracht wird, dass dann die Metallträgeranordnung in ein Umschäumwerkzeug eingelegt wird, dass anschließend der Glasdeckel auf die Dichtraupe und die Metallträgeranordnung aufgelegt wird unter Deformation der Dichtraupe, und dass abschließend die Kunststoffumschäumung vorgesehen wird, die die Metallträgeranordnung und den Randbereich des Glasdeckels umschließt und von außen umlaufend bis zu der Dichtraupe zwischen die Metallträgeranordnung und die Unterseite des Glasdeckels eindringt und aushärtet. Die Dichtraupe haftet bereits bei der Aufbringung auf die Metallträgeranordnung an der Oberfläche der Metallträgeranordnung an und bleibt deformierbar, wenigstens bis der Glasdeckel auf die Dichtraupe und die Metallträgeranordnung aufgelegt ist. In vorteilhafter Weise weist die Dichtraupe eine relativ hohe Viskosität auf, die nach dem Aufbringen auf die Metallträgeranordnung verhindert, dass die Dichtraupe fließt.

In Ausgestaltung des Verfahrens wird die Dichtraupe manuell oder zumindest teilweise automatisiert auf die Metallträgeranordnung aufgebracht. Bei vollständig automatisiertem Aufbringen der Dichtraupe wird die Dichtraupe vorzugsweise über einen Roboter aus einem entsprechenden Dichtmassebehältnis herausgedrückt und mittels des Roboters auf die Oberfläche der Metallträgeranordnung umlaufend aufgebracht. Die Dichtraupe wird derart kontinuierlich umlaufend aufgebracht, dass die Raupenenden auf Stoß und miteinander fluchtend zusammengeführt werden. Die Viskosität der Dichtraupe ist so gewählt, dass die Raupenenden zumindest geringfügig ineinanderfließen, wodurch sich ein zumindest weitgehend nahtloser Übergang der Dichtraupe im Bereich der Raupenenden ergibt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Glasdeckeleinheit für ein Schiebedachsystem eines Personenkraftwagens,
- Fig. 2: schematisch in einer Draufsicht die Glasdeckeleinheit nach Fig. 1,
- Fig. 3: schematisch und in vergrößerter Darstellung einen Schnitt durch die Glasdeckeleinheit nach Fig. 2 entlang der Schnittlinie III-III in Fig. 2,
- Fig. 4: eine Schnittdarstellung ähnlich Fig. 3, jedoch unter Weglassung eines Glasdeckels und einer Kunststoffumschäumung und
- Fig. 5: eine Längsschnittdarstellung entlang der Schnittlinie V-V in Fig. 4.

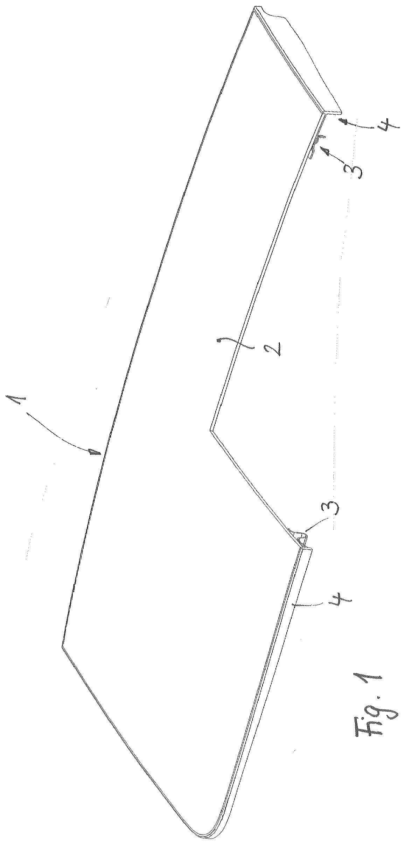

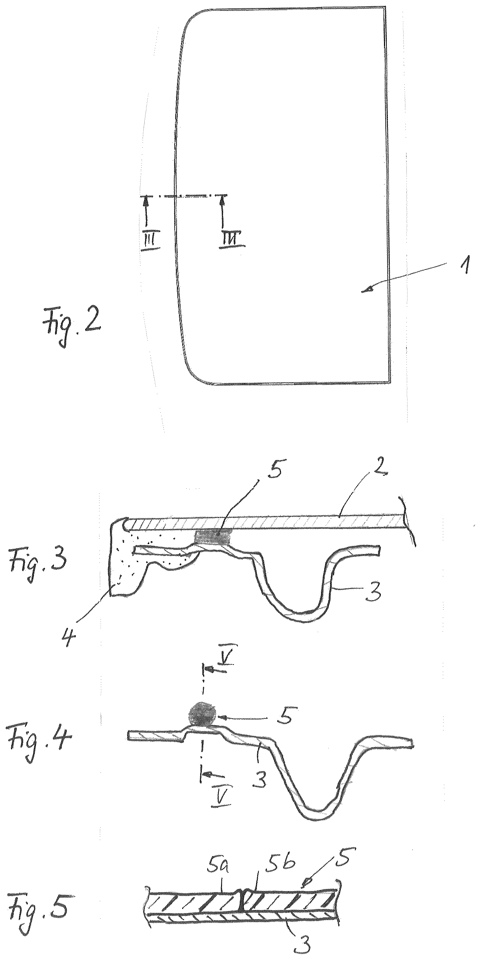

Ein Personenkraftwagen weist in seinem Dachbereich ein Schiebedachsystem auf, das mit einer Glasdeckeleinheit 1 gemäß den Fig. 1 bis 3 versehen ist. Die Glasdeckeleinheit 1 weist einen Glasdeckel 2 auf, dem im Bereich seiner Unterseite eine rahmenförmige Metallträgeranordnung 3 zugeordnet ist, die aus einer Stahl- oder einer Aluminiumlegierung hergestellt ist. Die Metallträgeranordnung 3 dient zur Halterung entsprechender Funktionskomponenten des Schiebedachsystems, die zur Verlagerung der Glasdeckeleinheit 1 zwischen einer Schließstellung, einer Lüfterstellung und einer Öffnungsstellung relativ zu einer Dachöffnung des Schiebedachsystems dienen. Die Metallträgeranordnung 3 erstreckt sich im Wesentlichen parallel zu entsprechenden Randbereichen des Glasdeckels 2 und ist mittels einer formstabilen Kunststoffumschäumung 4 an dem Glasdeckel 2 fixiert. Die Kunststoffumschäumung 4 erstreckt sich umlaufend über einen gesamten Randbereich des Glasdeckels 2 und fixiert die Metallträgeranordnung 3 in geringem Abstand relativ zu einer Unterseite des Glasdeckels 2. Zur Aufrechterhaltung des Abstandes einer Oberseite der Metallträgeranordnung 3 relativ zur Unterseite des Glasdeckels 2 ist zwischen dem Glasdeckel 2 und der Metallträgeranordnung 3 eine umlaufende Dichtraupe 5 vorgesehen, die auf einer Oberseite der Metallträgeranordnung 3 anhaftet, und die in fertig montiertem Endzustand gemäß Fig. 3 deformiert ist. Anhand der Fig. 4 und 5 ist die Anhaftung der Dichtraupe 5 auf der Oberseite der Metallträgeranordnung 3 zu erkennen, bevor der Glasdeckel 2 aufgebracht und die Kunststoffumschäumung 4 eingebracht werden. Die Dichtraupe 5 wird durch eine fließfähige, vorzugsweise gel- oder cremeartige Dichtmasse gebildet, die kontinuierlich strangförmig auf die Oberfläche der Metallträgeranordnung 3 umlaufend längs der rahmenförmigen Metallträgeranordnung 3 aufgebracht wird und auf der Oberfläche, d. h. der Oberseite, der Metallträgeranordnung 3 anhaftet. Als Dichtmasse ist ein Ein- oder Zweikomponenten-Klebstoff, ein PU-Weich- oder -Hartschaum oder Silikon oder ein vergleichbares Material vorgesehen. Anhand der Fig. 5 ist erkennbar, dass die Dichtraupe beim kontinuierlichen Aufbringen so entlang der Metallträgeranordnung 3 verlegt wird, dass ein endseitiges Raupenende 5b der Dichtraupe 5 unmittelbar auf Stoß an ein anfangsseitiges Raupenende 5a fluchtend mit diesem anfangsseitigen Raupenende 5a angefügt wird, so dass das anfangsseitige Raupenende 5a und das endseitige Raupenende 5b zumindest geringfügig ineinanderfließen und so einen zumindest weitgehend nahtfreien Übergang im Bereich der Raupenenden der Dichtraupe 5 ermöglichen. Hierdurch wird eine ringförmig umlaufende Dichtraupe geschaffen, die eine sichere Barriere für die Kunststoffumschäumung 4 über einen gesamten Umfang des Glasdeckels 2 und der Metallträgeranordnung 3 gewährleistet.

Zur Herstellung der Glasdeckeleinheit 1 wird zunächst die Dichtraupe 5 manuell oder automatisiert auf die Oberfläche der Metallträgeranordnung 3 strangförmig aufgebracht. Anschließend wird die Metallträgeranordnung 3 in ein geeignetes Umschäumwerkzeug eingelegt. Dann wird der Glasdeckel 2 auf die Dichtraupe 5 der Metallträgeranordnung 3 aufgelegt und gegebenenfalls zusätzlich aufgepresst, wodurch die Dichtraupe 5 gemäß der schematischen Darstellung nach Fig. 3 deformiert wird. In einem letzten Schritt wird die Kunststoffumschäumung 4 im Umschäumwerkzeug eingebracht, die sich umlaufend über den gesamten Umfang des Glasdeckels 2 und der Metallträgeranordnung 3 erstreckt, und die von außen her in einen verbleibenden Spalt zwischen der Oberseite der Metallträgeranordnung 3 und der Unterseite des Glasdeckels 2 bis zu einer Begrenzungskontur der Dichtraupe 5 eindringt (Fig. 3). Nach dem Aushärten der Kunststoffumschäumung 4 wird die fertiggestellte Glasdeckeleinheit 1 aus dem Umschäumwerkzeug entnommen und an die zugehörigen Funktionskomponenten des Schiebedachsystems montiert.

Die Metallträgeranordnung 3 ist als Blechbiegeteil ausgeführt und weist umlaufend im Bereich der Dichtraupe 5 eine nach oben abragende Auswölbung auf, deren Oberfläche eine ebene Auflageplattform für die Dichtraupe 5 bildet. Die Auswölbung erstreckt sich über den gesamten Umfang der Metallträgeranordnung 3.

Die Metallträgeranordnung 3 weist eine rahmenförmige Metallblechbiegekonstruktion auf, deren Blechstärke zwischen 3 und 4 mm beträgt. Durch das Auflegen des Glasdeckels 2 und gegebenenfalls zusätzlichen Druck auf den Glasdeckel 2 von oben her wird die Dichtraupe 5 so weit komprimiert, dass sich zwischen der Oberseite der Metallträgeranordnung 3, d. h. der Auflageplattform für die Dichtraupe, und der Unterseite des Glasdeckels 2 umlaufend ein gleichmäßiger Abstand von etwa 1 mm ergibt. Die Oberseite der Metallträgeranordnung 3 ist im Bereich der Oberseite der Auswölbung der Metallträgeranordnung 3 zu verstehen, so dass faktisch die Dichtraupe auf eine Stärke von etwa 1 mm komprimiert wird. Die Dichtraupe 5 haftet auf der Oberseite der Metallträgeranordnung 3 an. Die Dichtraupe haftet hingegen nicht an der Unterseite des Glasdeckels 2 bzw. der Splitterschutzfolie an. Die Fixierung des Glasdeckels 2 relativ zur Metallträgeranordnung 3 erfolgt vielmehr ausschließlich über die Kunststoffumschäumung 4.

## Patentansprüche

1. Glasdeckeleinheit (1) eines Schiebedachsystems für ein Kraftfahrzeug mit einem Glasdeckel (2) sowie mit einer Metallträgeranordnung (3) und mit einer Kunststoffumschäumung (4), die in einem Randbereich des Glasdeckels (2) vorgesehen ist und die Metallträgeranordnung (3) relativ zu einer Unterseite des Glasdeckels (2) fixiert, wobei zwischen einer Oberseite der Metallträgeranordnung (3) und der Unterseite des Glasdeckels (2) ein Dichtungseinleger vorgesehen ist, der eine Beabstandung der Oberseite der Metallträgeranordnung (3) zu der Unterseite des Glasdeckels (2) sicherstellt, **dadurch gekennzeichnet, dass** der Dichtungseinleger als Dichtraupe (5) aus einem deformierbaren Material gestaltet ist, die ringförmig auf der Metallträgeranordnung (3) verläuft, die an der Metallträgeranordnung (3) anhaftet, und die auf Stoß fluchtend aneinanderschließende Raupenenden (5a, 5b) aufweist.

2. Glasdeckeleinheit nach Anspruch 1, **dadurch gekennzeichnet, dass** die Dichtraupe (5) durch eine flüssig oder fließfähig verarbeitbare Dichtmasse gebildet ist.

3. Glasdeckeleinheit nach Anspruch 2, **dadurch gekennzeichnet, dass** als Dichtmasse PU-Weich- oder -Hartschaum, ein Klebstoff, Silikon oder ein vergleichbares Material vorgesehen ist.

4. Glasdeckeleinheit nach Anspruch 3, **dadurch gekennzeichnet, dass** als Dichtmasse ein Ein- oder Mehrkomponenten-Material vorgesehen ist.

5. Glasdeckeleinheit nach Anspruch 1, **dadurch gekennzeichnet, dass** die Metallträgeranordnung (3) mit einer Beschichtung, insbesondere durch eine kathodische Tauchlackierung, versehen ist.

6. Verfahren zur Herstellung einer Glasdeckeleinheit (1) nach einem der vorhergehenden Ansprüche, **dadurch gekennzeichnet, dass** die Dichtraupe (5) kontinuierlich und ringförmig umlaufend auf die Metallträgeranordnung (3) aufgebracht wird, dass dann die Metallträgeranordnung (3) in ein Umschäumwerkzeug eingelegt wird, dass anschließend der Glasdeckel (2) auf die Dichtraupe (5) und die Metallträgeranordnung (3) aufgelegt wird unter Deformation der Dichtraupe (5), und dass abschließend die Kunststoffumschäumung (4) vorgesehen wird, die die Metallträgeranordnung (3) und den Randbereich des Glasdeckels (2) umschließt und von außen umlaufend bis zu der Dichtraupe (5) zwischen die Metallträgeranordnung (3) und die Unterseite des Glasdeckels (2) eindringt und aushärtet.

7. Verfahren nach Anspruch 6, **dadurch gekennzeichnet, dass** die Dichtraupe (5) manuell oder zumindest teilweise automatisiert auf die Metallträgeranordnung (3) aufgebracht wird.
